Europäisches Patentamt

European Patent Office

Office européen des brevets

(11) Veröffentlichungsnummer: **0 330 650**
**A2**

(12) # EUROPÄISCHE PATENTANMELDUNG

(21) Anmeldenummer: **89890050.1**

(22) Anmeldetag: **21.02.89**

(51) Int. Cl.⁴: **G 01 N 30/30**
**G 01 N 30/66**

(30) Priorität: **22.02.88 AT 412/88**

(43) Veröffentlichungstag der Anmeldung:
**30.08.89 Patentblatt 89/35**

(84) Benannte Vertragsstaaten:
**BE CH DE FR GB IT LI LU NL SE**

(71) Anmelder: **VOEST-ALPINE STAHL GESELLSCHAFT m.b.H.**
**Turmstrasse 45**
**A-4020 Linz (AT)**

(72) Erfinder: **Zuder, Gerald, Dipl.-Ing. Dr.**
**Salzlände 13**
**A-8700 Leoben (AT)**

**Weissensteiner, Erich**
**Nr.119**
**A-8712 Niklasdorf (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) **Einrichtung zum Analysieren von Gasen.**

(57) Bei einer Einrichtung zum Analysieren von Gasen mit einer thermostatisch temperierten Gaschromatographiesäule (2), an welche Trägergas und Probegas anschließbar sind und bei welcher die Ausgangssignale für die analytische Auswertung von einem Wärmeleitfähigkeitsdetektor (8) mit beheizten Meßfühlern abgeleitet sind, wird eine gesonderte Leitung (13) für das Trägergas unmittelbar mit dem (Wärmeleitfähigkeitsdetektor) WLD (8) verbunden. Die Probengefäße (18,19) sind in einer Kühlvorrichtung zur Einstellung von Temperaturen unter dem Taupunkt, insbesondere unter dem Gefrierpunkt, von Wasser angeordnet und an die Probengefäße (18,19) eine Saugpumpe (20) angeschlossen, deren Druckseite über elektromagnetische Ventile (22,23,24,25) mit der Aufgabeseite der Gaschromatographiesäule (2) verbunden ist. Die Gaschromatorgraphiesäule (2) ist hiebei auf Temperaturen unterhalb des Gefrierpunktes von Wasser thermostatisch regelbar.

FIG. 1

EP 0 330 650 A2

**Beschreibung**

## Einrichtung zum Analysieren von Gasen

Die Erfindung bezieht sich auf eine Einrichtung zum Analysieren von Gasen mit einer thermostatisch temperierten Gaschromatographiesäule, an welche Trägergas und Probegas anschließbar sind, bei welcher die Ausgangssignale für die analytische Auswertung von einem Wärmeleitfähigkeitsdetektor mit beheizten Meßfühlern abgeleitet sind.

Gaschromatographieeinrichtungen sind in unterschiedlichen Ausstattungen und mit unterschiedlichen Einrichtungen zur Detektion bzw. der qualitativen oder quantitativen Auswertung der Analyse von Gasgemischen bekannt. Bekannte Einrichtungen dieser Art verwenden in einem Ofen geheizte Gaschromatographiesäulen mit unterschiedlichen Längen und Dicken und derartige Säulen können unterschiedliche Beschichtungen bzw. Füllungen aufweisen. Zur Erhöhung der Selektivität bzw. zur Verbesserung der Trennung von Gasgemischen kann zum einen ein geeignetes Beschichtungs- oder Beschickungsmaterial für die Säule gewählt werden und zum anderen die Temperatur der Säule eingestellt werden. Bekannte Einrichtungen zur Veränderung der Temperatur der Säule basieren auf einer Beheizung der Säule, wobei unterschiedlich hohe Temperaturniveaus, zumeist aber Temperaturniveaus über 35°C, eingestellt werden. Mit derartigen Gaschromatographieeinrichtungen sind eine Reihe von Trennungen von Gasgemischen mehr oder minder exakt möglich. Relativ aufwendig und schwierig gestaltet sich jedoch beispielsweise die Trennung von Argon, Stickstoff und Sauerstoff in der Gasanalytik, da sie auf Grund des ähnlichen Molekulargewichtes überaus geringe Unterschiede in den Retentionszeiten zeigen.

Die Erfindung zielt nun darauf ab, eine Einrichtung der eingangs genannten Art zu schaffen, mit welcher auch problematische Trennungen, wie beispielsweise Trennungen von Argon, Stickstoff und Sauerstoff in der Gasanalytik mit konventio nellen Einrichtungen, wie sie für die Gaschromatographie mit gepackten Säulen üblich sind, gelingen, ohne den apparativen Aufwand wesentlich zu vergrößern. Eine wesentliche Vergrößerung des apparativen Aufwandes bestünde beispielsweise in der Verwendung von Systemen für den Einsatz von Kapillarsäulen bzw. Mikrowärmeleitfähigkeitsdetektoren. Zur Lösung dieser Aufgabe besteht die Erfindung im wesentlichen darin, daß eine gesonderte Leitung für das Trägergas unmittelbar mit dem (Wärmeleitfähigkeitsdetektor) WLD verbunden ist, daß die Probengefäße in einer Kühlvorrichtung zur Einstellung von Temperaturen unter dem Taupunkt, insbesondere unter dem Gefrierpunkt, von Wasser angeordnet sind, daß an die Probengefäße eine Saugpumpe angeschlossen ist, deren Druckseite über elektromagnetische Ventile mit der Aufgabeseite der Gaschromatographiesäule verbunden ist, und daß die Gaschromatographiesäule auf Temperaturen unterhalb des Gefrierpunktes von Wasser thermostatisch regelbar ist. Dadurch, daß konventionelle Wärmeleitfähigkeitsdetektoren verwendet werden, ergeben sich prinzipiell Probleme mit der Kühlung derartiger Detektoren, da diese einen Mindestgasdurchfluß benötigen, um einen störungsfreien Betrieb sicherzustellen. Die Trennung in der erforderlichen Qualität kann aber nur auf Kapillarsäulen erfolgen und derartige Kapillarsäulen können auf Grund der Begrenzung des Durchmessers nur eine maximale Durchflußmenge sicherstellen. Um nun mit derartigen Kapillarsäulen, insbesondere mit sogenannten wide-bore-Säulen einen konventionellen Wärmeleitfähigkeitsdetektor betreiben zu können, sind besondere Sicherheitsvorkehrungen erforderlich und erfindungsgemäß wird vorgeschlagen, derartigen Wärmeleitfähigkeitsdetektoren Trägergas unmittelbar, d.h. also unter Umgehung der Kapillarsäule, zuzuführen. Auf diese Weise wird sichergestellt, daß trotz des geringen Mengendurchflusses durch die Kapillarsäulen der Betrieb von konventionellen, einfachen Wärmeleitfähigkeitsdetektoren möglich wird. Um nun die Trennung weiter zu verbessern und ein Verlegen der Kapillarsäule mit Sicherheit hintanzuhalten, wird eine Ab scheidung der relativen Feuchtigkeit des Gases dadurch sichergestellt, daß das Probengas in einer Kühlvorrichtung unter den Taupunkt, insbesondere unter den Gefrierpunkt abgekühlt wird. Die auf diese Weise getrocknete Gasprobe wird nun erfindungsgemäß mit einer besonders einfachen Ventilsteuerung in den Gaschromatographen eingespült, wodurch eine einfache Synchronisierung des Integratorstarts mit dem Beginn der Messung erfolgen kann. Hiezu dient die in konventionellen Gaschromatographen übliche Technik, die Probe zunächst in eine Probenschleife zu spülen, wobei der Inhalt der Probenschleife in der Folge durch Trägergas in die Chromatographiesäule eingebracht werden kann. Eine weitere Verbesserung der Trennung wird insbesondere in bezug auf die schwer trennbaren Gase, Argon, Stickstoff und Sauerstoff, im besonderen Argon-Luft bzw. Argon-Sauerstoff, dadurch erreicht, daß abweichend von konventionellen Einrichtungen die Gaschromatographiesäule selbst nicht beheizt, sondern vielmehr gekühlt wird. Eine derartige Abkühlung der Chromatographiesäule führt zu einer Vergrößerung der Differenz der Retentionszeiten der zu trennenden Gase und liefert die gewünschte sichere Trennung der mit üblichen Einrichtungen und vertretbarem, apparativen Aufwand nicht mehr trennbaren Komponenten eines Gases.

Eine besonders einfache Ventilsteuerung für eine derartige Einrichtung läßt sich dadurch verwirklichen, daß die Ventilsteuerung vier Dreiwegventile enthält, wobei die Trägergasleitung und die Aufgabeseite der Gaschromatographiesäule über je ein Dreiwegeventil wahlweise miteinander oder unter Zwischenschaltung der Probenschleife miteinander verbindbar sind und an beide Enden der Probenschleife je ein weiteres Dreiwegeventil angeschlossen ist, von welchen eines mit der Pumpe und eines mit der Atmosphäre verbindbar ist, wobei die beiden weiteren Ventile miteinander unter Trennung von der Probenschleife verbindbar sind. Derartige Dreiwegventile lassen sich mit konventioneller Steuerelektronik ansteuern und es kann sichergestellt werden, daß in dem vorgewählten Zyklus aus dem gekühlten Probenaufnahmegefäß diejenige Menge abgezogen wird, welche in der Probenschleife aufgenommen werden kann, worauf nach dem Füllen der Probenschleife ein reproduzierbares Volumen, nämlich der Inhalt der Probenschleife durch einfaches Umstellen der Ventile in die Chromatographiesäule gespült werden kann. Bei sämtlichen Vorkehrungen, wie Schleifenspülung mit Probegas, Eichgas oder Trägergas, oder beim analytischen Trennvorgang, muß bei Verwendung von Kapillarsäulen bzw. bei Verwendung von gepackten Säulen mit geringem Gasfluß, wobei ein ordnungsgemäßes Funktionieren des Wärmeleitfähigkeitsdetektors nicht gewährleistet ist, eine entsprechende ergänzende Menge an Trägergas unmittelbar dem Wärmeleitfähigkeitsdetektor zur Verfügung gestellt werden, um eine Überhitzung des Detektors zu verhindern. Der Trägergasstrom, welcher durch die Kapillarsäule hindurchgeführt werden kann, reicht bei Verwendung konventioneller Wärmeleitfähigkeitsdetektoren für eine derartige Kühlung der Detektoren nicht aus, und um das Ergebnis nicht zu verzerren, ist mit Vorteil die Anordnung so getroffen, daß die Durchflußmengen des unmittelbar dem Detektor zugeführten Trägergases im Referenzzweig und im Meßzweig gesondert regelbar sind. Die unabhängige Einstellbarkeit der Durchflußmengen des unmittelbar dem Detektor zugeführten Trägergases im Referenzzweig und im Meßzweig dient hiebei der Abstimmung der Gesamtmenge bzw. Durchflußmenge im Meßzweig, da ja ein Teil des Trägergasstromes im Meßzweig aus der Säule zum Detektor gelangt.

Eine besonders einfache Kühlung der Gaschromatographiesäule kann dadurch erreicht werden, daß die Gaschromatographiesäule in einem Kühlmittelbad angeordnet ist, wobei für die Thermostatierung ein einfacher Laborkryostat genügt. Insgesamt wird somit eine kostengünstige und reproduzierbar betreibbare Anlage geschaffen, mit welcher ein weitgehend automatischer Ablauf von der Probenaufgabe bis zur Auswertung ohne Zeit verzögerung zwischen Probenaufgabe und Integratorstart möglich ist. Durch die Kühlung der Chromatographiesäule und die Verwendung eines Kryostaten zur Aufrechterhaltung einer entsprechend herabgesetzten Temperatur, kann eine wesentliche Verbesserung der analytischen Trennbarkeit von Gasen erzielt werden und durch die Tatsache, daß konventionelle Einrichtungen anstelle von aufwendigen Mikrosystemen Verwendung finden können, wird der Aufwand für die Messung wesentlich herabgesetzt.

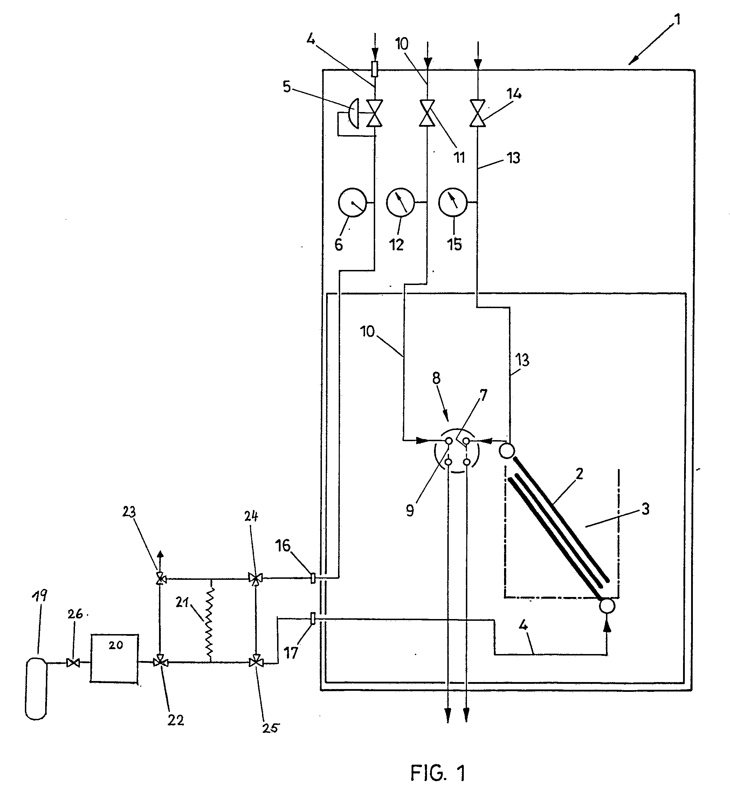

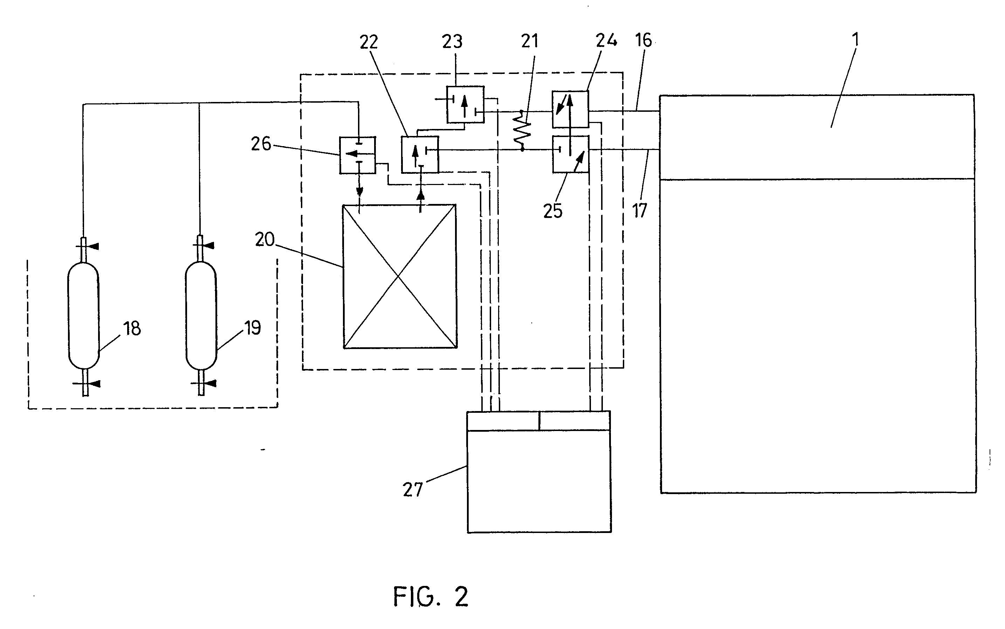

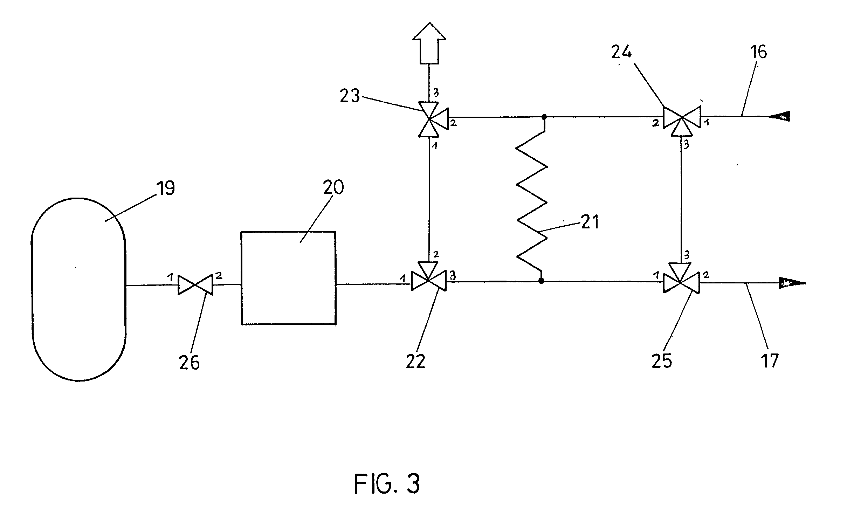

Die Erfindung wird nachfolgend an Hand eines in der Zeichnung schematisch dargestellten Ausführungsbeispieles näher erläutert. In dieser zeigen: Fig.1 eine schematische Ansicht eines Gaschromatographen mit den wesentlichen Elementen eines derartigen Gaschromatographen; Fig.2 die erfin-dungsgemäßen Zusatzeinrichtungen zu einer derar-tigen Gaschromatographieeinrichtung, und Fig.3 eine schematische Darstellung der Ventilanordnung bei der Einrichtung nach Fig.2.

In Fig.1 ist ein Gaschromatograph 1 dargestellt, dessen Säule 2 in einem Kühlmittelbad 3 auf entsprechend tiefer Temperatur kryostatisch gehalten ist. Der Säule 2 wird über eine Leitung 4 Trägergas zugeführt, wobei die Mengendurchflußregelung des Trägergases über ein Regelventil 5 eingestellt wird und die Durchflußmenge mittels eines Anzeigeinstrumentes 6 angezeigt werden kann. Das Trägergas gelangt durch die Gaschromatographiesäule 2, welche als wide-bore-Kapillarsäule ausgebildet ist, in den Meßzweig 7 eines Wärmeleitfähigkeitsdetektors 8. Der Referenzzweig 9 des gleichen Detektors 8 wird gleichzeitig gleichfalls von Trägergas über eine Leitung 10 versorgt, wobei auch hier wiederum die Durchflußmenge über ein entsprechendes Stellglied 11 eingestellt werden kann und über ein entsprechendes Anzeigegerät 12 abgelesen werden kann.

Dem Wärmeleitfähigkeitsdetektor 8 wird nun in seinem Meßzweig 7 über eine gesonderte Trägergasleitung 13 mit entsprechendem Regelorgan 14 und einer Meßvorrichtung für die Durchflußmenge 15, Trägergas zugeführt, um die Kühlung des Wärmeleitfähigkeitsdetektors 8 auf das gewünschte Niveau sicherzustellen, wenn die durch die Kapillarsäule bzw. die Säule 2 zur Verfügung gestellte Trägergasmenge für eine derartige Kühlung nicht ausreicht. Dies ist immer dann der Fall, wenn es sich bei dem Wärmeleitfähigkeitsdetektor um einen konventionellen Detektor und nicht um einen Mikrodetektor handelt.

Bei der Darstellung nach Fig.1 sind Anschlüsse 16 und 17 ersichtlich, über welche die gewünschte Probe in die Säule 2 eingespült werden kann, Mit 19 ist hiebei ein Proben- bzw. Eichgasgefäß bezeichnet. Das Proben- bzw. Eichgas wird in der Folge über eine Pumpe 20 abgezogen und über eine Probenschleife 21 und eine geeignete Ventilanordnung in die Chromatographiesäule 2 eingebracht. Die hiefür erforderlichen Ventile sind mit 22, 23, 24 und 25 bezeichnet, wozu noch ein einfaches Absperrventil 26 in der Leitung zwischen dem Probengefäß 19 und der Pumpe 20 vorgesehen ist.

In Fig.2 sind mit 18 und 19 Proben- bzw. Eichgasgefäße bezeichnet, welche in einer strichliert angedeuteten Kühleinrichtung angeordnet sind. Eine in diese Proben- bzw. Eichgasbehälter 18 und 19 eingesaugte Gasmenge kann durch Abkühlen unter den Taupunkt bzw. unter den Gefrierpunkt von Wasser getrocknet werden. Das auf diese Weise getrocknete Proben- bzw. Eichgas wird über eine Pumpe 20 abgezogen und es ist eine Probenschleife 21 vorgesehen, welche wahlweise mit Probe durch die Pumpe 20 befüllt werden kann oder durch Einbeziehung in den Trägergasstrom über die Anschlüsse 16 und 17 in die Chromatographiesäule 2 gespült werden kann. Die hiefür erforderlichen Ventile sind mit 22, 23, 24 und 25 bezeichnet, wozu noch ein einfaches Absperrventil 26 in der Leitung zwischen den Probegefäßen 18, 19 und der Pumpe 20 hinzukommt. Die Funktion und Wirkungsweise der Ventile 22, 23, 24 und 25, deren Steuerung von einer elektronischen Steuereinrichtung 27 übernommen wird, wird in Fig.3 näher erläutert.

In Fig.3 ist mit 16 wiederum der Anschluß für das Trägergas und mit 17 der Rückführungsanschluß zur Säule 2 bezeichnet. Die Probenschleife 21 kann mittels der Ventile 22 bis 25 wahlweise gespült, beladen oder in die Chromatographiesäule 2 entleert werden. Zu diesem Zweck ist im Falle des Spülens der Probenschleife 21 zunächst das Ventil 26 zwischen Probenbehälter 19 und Pumpe 20 zu öffnen, so daß die Pumpe Probe ansaugt. Die jeweils zur Verfügung stehenden Wege der Ventile 22, 23, 24 und 25 sind jeweils mit den Ziffern 1, 2 und 3 indiziert, so daß bei Stellung des Ventiles 22 in eine Verbindung $22_{1,3}$ der Weg von der Pumpe zur Probenschleife 21 frei ist. In dieser Phase muß das Ventil 24 in der Stellung $24_{1,3}$ und das Ventil 25 in der Stellung $25_{3,2}$ stehen, so daß das Trägergas über die Leitung 16 unmittelbar in die Anschlußleitung 17 zurück zur Säule gelangt. Ein Öffnen des Ventils 22 hat somit zunächst zur Folge, daß Probengas in die Probenschleife 21 gelangen kann und ein gleichzeitiges Öffnen des Ventils 23 in die Stellung $23_{2,3}$ führt zu einer Spülung der Schleife, wobei überschüssiges Probengas in Richtung Atmosphäre abgelassen wird. Nach einer vorbestimmten Zeit erfolgt eine Umschaltung der Ventile 22 und 23 unter gleichzeitigem Schließen des Ventiles 26, so daß in der Probenschleife 21 nunmehr Probe enthalten ist und die Pumpe 20 über das Ventil 22 in Stellung $22_{1,2}$ und das Ventil 23 in Stellung $23_{1,3}$ belüftet werden kann.

Zur Aufgabe der Probe auf die Säule werden nun die Ventile 24 und 25 umgestellt, wobei das Ventil 24 in die Stellung $24_{1,2}$ und das Ventil 25 in die Stellung $25_{1,2}$ gebracht wird. Der Trägergasstrom aus dem Anschluß 16 spült auf diese Weise den Inhalt der Probenschleife 21 über die Leitung 17 in die Säule. Durch weiteres Umschalten der Ventile lassen sich die Vorgänge zyklisch wiederholen und gleichzeitig mit dem Steuerbefehl für die Ventile lassen sich die entsprechenden Auswerteschaltungen aktivieren und insbesondere ein Integrator starten. Die Ventile können hiebei in vorteilhafter Weise als totvolumenfreie Ventile ausgebildet sein.

## Patentansprüche

1. Einrichtung zum Analysieren von Gasen mit einer thermostatisch temperierten Gaschromatographiesäule (2), an welche Trägergas und Probegas anschließbar sind, bei welcher die Ausgangssignale für die analytische Auswertung von einem Wärmeleitfähigkeitsdetektor (8) mit beheizten Meßfühlern abgeleitet sind, dadurch gekennzeichnet, daß eine gesonderte Leitung für das Trägergas unmittelbar mit dem (Wärmeleitfähigkeitsdetektor) WLD verbunden ist, daß die Probengefäße (18,19) in einer Kühlvorrichtung zur Einstellung von Temperaturen unter dem Taupunkt, insbesondere unter dem Gefrierpunkt, von Wasser angeordnet sind, daß an die Probengefäße (18,19) eine Saugpumpe (20) angeschlossen ist, deren Druckseite über elektromagnetische Ventile (22,23,24, 25) mit der Aufgabeseite der Gaschromatographiesäule (2) verbunden ist, und daß die Gaschromatographiesäule (2) auf Temperaturen unterhalb des Gefrierpunktes von Wasser thermostatisch regelbar ist.

2. Einrichtung nach Anspruch 1, dadurch gekennzeichnet, daß die Ventilsteuerung vier Dreiwegventile (22,23,24,25) enthält, wobei die Trägergasleitung (16) und die Aufgabeseite (17) der Gaschromatographiesäule (2) über je ein Dreiwegeventil (24,25) wahlweise miteinander oder unter Zwischenschaltung der Probenschleife (21) miteinander verbindbar sind und an beide Enden der Probenschleife (21) je ein weiteres Dreiwegeventil (22,23) angeschlossen ist, von welchen eines mit der Pumpe (20) und eines mit der Atmosphäre verbindbar ist, wobei die beiden weiteren Ventile (22,23) miteinander unter Trennung von der Probenschleife verbindbar sind.

3. Einrichtung nach Anspruch 1 oder 2, dadurch gekennzeichnet, daß die Gaschromatographiesäule (2) in einem Kühlmittelbad (3) angeordnet ist.

4. Einrichtung nach Anspruch 1, 2 oder 3, dadurch gekennzeichnet, daß die Durchflußmengen des unmittelbar dem Detektor (8) zugeführten Trägergases im Referenzzweig (9) und im Meßzweig (7) gesondert regelbar sind.

FIG. 1

FIG. 2

EP 0 330 650 A2

FIG. 3